# EUROPÄISCHE PATENTSCHRIFT

(11) **EP 3 431 245 B1**
(45) Veröffentlichungstag und Bekanntmachung des Hinweises auf die Patenterteilung: **11.01.2023**
(21) Anmeldenummer: 18179262.3
(22) Anmeldetag: 22.06.2018
(51) Int. Cl.: B29C 39/12, B29C 37/00, B29D 99/00

(54) **VERFAHREN ZUR HERSTELLUNG EINES KUNSTSTOFFFORMTEILS MIT EINEM OPTISCH STRUKTURIERTEN OBERFLÄCHENBEREICH UND HERGESTELLTES KUNSTSTOFFFORMTEIL**
METHOD FOR PRODUCING A PLASTIC MOULDED PART WITH AN OPTICALLY STRUCTURED SURFACE REGION AND A PLASTIC MOULDED PART
PROCÉDÉ DE FABRICATION D'UNE PIÈCE MOULÉE EN MATIÈRE PLASTIQUE DOTÉE D'UNE ZONE DE SURFACE STRUCTURÉE OPTIQUEMENT ET PIÈCE MOULÉE EN MATIÈRE PLASTIQUE FABRIQUÉE

(30) Priorität: 19.07.2017 DE 102017116306
(43) Veröffentlichungstag der Anmeldung: 23.01.2019
(73) Patentinhaber: BLANCO GmbH + Co KG, 75038 Oberderdingen (DE)
(72) Erfinder: Senk, Benjamin, 74889 Sinsheim (DE); Hajek, Andreas, 76356 Weingarten (DE); Gansel, Julia, 76646 Bruchsal (DE)
(74) Vertreter: Hoeger, Stellrecht & Partner Patentanwälte mbB

(56) Entgegenhaltungen:
- EP-A2- 0 229 262
- EP-A2- 0 285 046
- WO-A1-03/080716
- WO-A1-2007/137623
- WO-A1-2008/055923
- AU-B2- 594 920
- CH-A- 371 035
- DE-A1- 4 313 925
- DE-A1- 19 633 479
- DE-A1-102008 059 719
- US-A1- 2003 197 306
- US-A1- 2004 121 161

## Beschreibung

Die vorliegende Erfindung betrifft ein Verfahren zur Herstellung eines Kunststoffformteils für den Küchen- oder Sanitärbereich mit einem optisch strukturierten Oberflächenbereich, umfassend das Einbringen einer Gießmasse, die ein Bindemittel mit einem polymerisierbaren Monomer und einen Anteil von 40 bis 85 Gew.% mindestens eines anorganischen Füllstoffs umfasst, in ein mehrteiliges Formwerkzeug, Aushärten der Gießmasse in dem Formwerkzeug und Entnehmen des hergestellten Kunststoffformteils aus dem Formwerkzeug.

Die Erfindung betrifft ferner ein Kunststoffformteil für den Küchen- oder Sanitärbereich mit einem optisch strukturierten Oberflächenbereich, welches gemäß diesem Verfahren hergestellt ist.

Die Herstellung von Küchen- und Sanitärartikeln wie z.B. Küchenspülen, Küchenarbeitsplatten, Waschbecken oder Badewannen aus einer aushärtbaren Gießmasse ist seit längerem bekannt. Gattungsgemäße Verfahren und entsprechend hergestellte Kunststoffformteile auf der Basis von Polymethylmethacrylat oder anderen Polymeren werden beispielsweise in der DE 38 32 351 A1 oder der WO 2005/071000 A1 beschrieben. Der relativ hohe Anteil an anorganischem Füllstoff, der in der aus der Bindemittelkomponente gebildeten Polymermatrix verteilt ist, ist hierbei erforderlich, um die für diesen Einsatzbereich erforderlichen Materialeigenschaften zu erhalten, wie z.B. eine ausreichend hohe Bruchfestigkeit, Temperaturbeständigkeit und Kratzfestigkeit der Oberfläche.

Das Gießverfahren zur Herstellung der Kunststoffformteile ist dahingehend optimiert, dass eine möglichst homogene Verteilung aller Bestandteile der Gießmasse erreicht wird, so dass die Oberfläche des Kunststoffformteils, und insbesondere die im Gebrauchszustand sichtbaren Oberflächenbereiche, keinerlei Fehlstellen wie z.B. Löcher, Streifen oder Schlieren aufweisen. Damit wird auch eine Oberflächenstruktur erhalten, die - abgesehen von einer etwaigen farblichen Strukturierung durch die Füllstoffe - optisch homogen ist. Eine inhomogene Oberfläche mit einer Beton-ähnlichen Anmutung, die für bestimmte Produkte erwünscht ist, kann mit den bekannten Herstellungsverfahren jedoch nicht erzeugt werden.

Die DE 43 13 925 A1 offenbart Polymerisatformstücke aus hochgefüllten Gießharzen mit metallisch glänzenden Oberflächen, die unter Verwendung von Perlglanzpigment-haltigen Beschichtungen hergestellt sind.

Die EP 0 285 046 A2 offenbart muldenförmige Kunststoff-Sanitärgegenstände wie Bade- oder Duschwannen mit einer Kunststoffinnenschicht und einer stoffschlüssig verbundenen Kunststoff-Außenschicht. Die Innenschicht weist eine Wandstärke von mindestens 1 mm auf, und beide Schichten sind als Reaktionsgussstücke ausgebildet.

Die AU 594 920 B2 offenbart ein Verfahren zur Herstellung von Produkten aus einem härtbaren, harzartigen Formmaterial. Dabei wird eine vorgewärmte Form mit einer Gelcoatschicht versehen und anschließend mit dem Formmaterial befüllt.

Die US 2004/0121161 A1 offenbart einen geformten Waschtisch mit einer Oberflächenschicht und einer Stützschicht, wobei die Stützschicht ein Polyurethanharz und einen Füllstoff umfasst.

Die WO 2003/080716 A1 offenbart eine aushärtbare Gießmasse zur Herstellung von Kunststoffformkörpern mit einer flüssigen monomeren Acrylatkomponente und einem Anteil eines partikelförmigen anorganischen Materials im Bereich von 45 bis 85 Gew.%, bezogen auf die Gießmasse. Die Gießmasse enthält ferner eine hydrophobe Monomerkomponente mit mindestens einem mit einer ungesättigten Gruppe funktionalisierten Organosiloxan.

Die CH 371 035 A offenbart ein Verfahren zur Herstellung von Werkstücken aus Kunststein mit Kunstharzüberzug.

Die WO 2008/055923 A1 offenbart ein Verfahren zur Beschichtung eines Substrats, wobei eine Oberflächenschicht des Substrats ein elektrisch erwärmbares Material enthält.

Der Erfindung liegt daher die Aufgabe zugrunde, ein Verfahren zur Herstellung eines Kunststoffformteils vorzuschlagen, das einen optisch strukturierten Oberflächenbereich mit einer Beton-ähnlichen Anmutung aufweist.

Diese Aufgabe wird durch ein Verfahren gemäß Anspruch 1 gelöst.

Überraschenderweise kann durch diesen zusätzlichen Verfahrensschritt auf reproduzierbare Weise eine Inhomogenität in dem betreffenden Oberflächenbereich des Kunststoffformteils erzeugt werden, die zu dem gewünschten optischen Eindruck einer Beton-ähnlichen Anmutung führt. Gleichzeitig haben diese Inhomogenitäten jedoch keinen wesentlichen Einfluss auf die Beständigkeit der Oberfläche des Formteils gegen mechanische, thermische und chemische Einwirkungen, die die Voraussetzung für eine Verwendbarkeit im Küchen- und Sanitärbereich darstellt.

Während des Aushärtens der im Anschluss an die Beschichtungsmasse in das Formwerkzeug eingebrachten Gießmasse ergibt sich eine stoff- und kraftschlüssige Verbindung zwischen der aus der Beschichtungsmasse gebildeten Oberflächenschicht und dem aus der Gießmasse gebildeten Hauptkörper des Kunststoffformteils. Das nach dem erfindungsgemäßen Verfahren hergestellte Kunststoffformteil weist somit insgesamt eine gute mechanische Festigkeit auf.

Es ist bei dem erfindungsgemäßen Verfahren vorgesehen, dass die Beschichtungsmasse unmittelbar auf mindestens einen Teilbereich der Innenseite des Formwerkzeugs aufgetragen wird, und dass die Gießmasse unmittelbar nach dem Auftragen der Beschichtungsmasse in das Formwerkzeug eingebracht wird. Mit anderen Worten wird erfindungsgemäß nur ein einziger Beschichtungsschritt durchgeführt und es kommt neben der oben beschriebenen Beschichtungsmasse kein weiteres Beschichtungsmittel zum Einsatz. Es hat sich gezeigt, dass gerade durch das einmalige Auftragen einer einzigen Beschichtungsmasse die gewünschte, optisch strukturierte Oberfläche des Kunststoffformteils erzielt werden kann.

Der optisch strukturierte Oberflächenbereich kann entweder die gesamte Oberfläche des hergestellten Kunststoffformteils umfassen oder nur einen Teilbereich. In aller Regel ist eine optische Strukturierung desjenigen Oberflächenbereiches ausreichend, der im späteren Gebrauchszustand des Kunststoffformteils sichtbar ist. Insofern wird bei einer bevorzugten Ausführungsform des erfindungsgemäßen Verfahrens die Beschichtungsmasse auf die Innenseite derjenigen Hälfte eines zweiteiligen Formwerkzeugs aufgebracht, die eine Sichtseite des hergestellten Kunststoffformteils bildet. Bei einer Küchenspüle ist dies z.B. die Innenseite des Beckens, die Oberseite einer eventuell angeformten Abtropffläche sowie weitere sichtbare Flächenbereiche.

Günstig ist es, wenn die aufgebrachte Beschichtungsmasse vor dem Einbringen der Gießmasse während eines Zeitraums von 1 bis 5 min ausgehärtet wird, bevorzugt von 2 bis 3 min.

Das Bindemittel der Gießmasse und der Beschichtungsmasse umfasst vorzugsweise dasselbe polymerisierbare Monomer. Auf diese Weise kann eine optimale stoffschlüssige Verbindung zwischen der aus der Beschichtungsmasse gebildeten Oberflächenschicht und dem aus der Gießmasse gebildeten Hauptkörper des Kunststoffformteils erreicht werden.

Das Bindemittel der Gießmasse und/oder der Beschichtungsmasse umfasst vorzugsweise Methylacrylat oder Methylmethacrylat, die nach der Aushärtung zu einem Kunststoffformkörper auf Acrylharzbasis führen. Alternativ kann die Gießmasse ein Epoxid, eine ungesättigte Dicarbonsäure oder deren Anhydrid, oder ein Diisocyanat als Monomer umfassen, um in Kombination mit einem weiteren Monomer mit entsprechender Funktionalisierung (aliphatische oder aromatische Amine, Anhydride, zwei- oder mehrwertige aromatische oder aliphatische Alkohole, Polyole, Styrol etc.) einen Kunststoffformkörper auf Basis eines Epoxidharzes, eines ungesättigten Polyesterharzes oder eines Polyurethanharzes herzustellen.

Zur Erhöhung der Viskosität der Gießmasse bzw. der Beschichtungsmasse kann das Bindemittel einen Anteil an vorpolymerisiertem Polymethylacrylat (PMA) oder Polymethylmethacrylat (PMMA) umfassen.

Um die Polymerisation und die Aushärtung der Gießmasse bzw. der Beschichtungsmasse zu ermöglichen, umfasst das Bindemittel günstigerweise einen oder mehrere Vernetzer sowie Peroxide.

Als anorganische Füllstoffe der Gießmasse können im Rahmen der Erfindung alle aus dem Stand der Technik bekannten Materialien eingesetzt werden. Bevorzugt ist der mindestens eine anorganische Füllstoff ausgewählt aus Quarz, Cristobalit, Tridymit, Glas, Aluminiumtrihydroxid, Wollastonit, Eisenoxide oder Mischungen hiervon.

Der oder die anorganischen Füllstoffe der Gießmasse liegen vorzugsweise als granulare Partikel mit einem mittleren Durchmesser von ca. 0,1 bis ca. 1 mm vor. Durch die Auswahl der Partikelgröße, insbesondere auch durch die Verwendung mehrerer Füllstofffraktionen mit unterschiedlichen Partikelgrößen, können bestimmte Eigenschaften der hergestellten Kunststoffformteile eingestellt werden.

Gemäß der Erfindung unterscheidet sich der partikelförmige Füllstoff der Beschichtungsmasse von dem anorganischen Füllstoff der Gießmasse. Dabei kann der Unterschied in der stofflichen Zusammensetzung, in der Partikelgröße und/oder in der Partikelform der jeweils verwendeten Füllstoffe bestehen. Die Füllstoffe sind so ausgewählt, dass sich zwischen der Gießmasse und der Beschichtungsmasse ein optischer Kontrast ergibt. Dies führt zu einer besonders ausgeprägten Oberflächenstruktur mit Beton-ähnlicher Anmutung, wenn in dem hergestellten Kunststoffformteil die Gießmasse bereichsweise durch die Beschichtungsmasse durchscheint.

Allerdings ist es im Rahmen der vorliegenden Erfindung bevorzugt, wenn die Beschichtungsmasse keine Farbstoffe, Farbpigmente und/oder Effektpigmente (wie z.B. Perglanzpigmente) enthält, oder nur solche Farbstoffe, Farbpigmente und/oder Effektpigmente, die auch in der Gießmasse enthalten sind. Im Gegensatz zu bekannten Verfahren, bei denen farbige oder metallisch glänzende Oberflächenbereiche erzeugt werden, die sich von den unbeschichteten Oberflächenbereichen des Kunststoffformteils deutlich unterscheiden, führt das erfindungsgemäße Verfahren zu vergleichsweise dezenten optischen Unterschieden innerhalb des beschichteten Teilbereichs, mit der oben beschriebenen beton-ähnlichen Anmutung.

Bevorzugt ist der partikelförmige Füllstoff der Beschichtungsmasse ausgewählt aus Quarz, Cristobalit, Tridymit, Phlogopit, Muskovit, Basalt, natürlichem und beschichtetem Sand, Kaolin, Glas, Metalloxiden sowie silikatischen Mineralien, insbesondere Wollastonit. Es kann im Rahmen der Erfindung auch eine Mischung aus mehreren Füllstoffen in der Beschichtungsmasse eingesetzt werden.

Der partikelförmige Füllstoff der Beschichtungsmasse weist bevorzugt eine Partikelgröße im Bereich von 1 bis 500 µm auf, weiter bevorzugt von 1 bis 250 µm, insbesondere von 2 bis 50 µm.

Die Beschichtungsmasse umfasst bevorzugt einen Anteil von weniger als 40 Gew.% des partikelförmigen Füllstoffs, d.h. einen geringeren Füllstoffanteil als die Gießmasse. Besonders bevorzugt liegt der Füllstoffanteil in der Beschichtungsmasse im Bereich von 20 bis 30 Gew.%.

Die Beschichtungsmasse wird in einer Menge von 0,02 bis 0,03 g pro cm² der betroffenen Innenfläche des Formwerkzeugs aufgebracht. Daraus resultiert eine bevorzugte Schichtdicke der Beschichtungsmasse im Bereich von 0,05 bis 0,15 mm.

Das Gewichtsverhältnis der eingesetzten Beschichtungsmasse zur eingesetzten Gießmasse liegt typischerweise im Bereich von 1:75 bis 1:25, bevorzugt im Bereich von 1:50 bis 1:40. Dieses Verhältnis ist von der Geometrie des hergestellten Kunststoffformteils abhängig, d.h. vom Verhältnis des betroffenen Oberflächenbereichs zum Volumen.

Die Füllstoffpartikel sowohl der Gießmasse als auch der Beschichtungsmasse können vorteilhafterweise mit einer reaktiven Komponente beschichtet sein. Die Art der reaktiven Komponente entspricht dabei dem polymerisierbaren Monomer des Bindemittels, so dass auf diese Weise eine optimale Anbindung der Füllstoffpartikel an die Polymermatrix erreicht wird. Für die Herstellung von Kunststoffformteilen auf Basis von PMA oder PMMA sind die Partikel insbesondere mit einem Methacrylsilan beschichtet.

Die vorliegende Erfindung betrifft ferner ein Kunststoffformteil für den Küchen- oder Sanitärbereich mit einem optisch strukturierten Oberflächenbereich, das nach dem erfindungsgemäßen Verfahren hergestellt ist. Vorteile und bevorzugte Ausführungsformen des erfindungsgemäßen Kunststoffformteils wurden bereits im Zusammenhang mit dem erfindungsgemäßen Verfahren beschrieben.

Die optische Strukturierung führt insbesondere zu einer Beton-ähnlichen Anmutung der Oberfläche des Kunststoffformteils, wie oben beschrieben.

Das Kunststoffformteil ist bevorzugt eine Küchenspüle, eine Küchenarbeitsplatte, ein Waschbecken oder eine Badewanne, wobei die Sichtseite des Kunststoffformteils die optische Strukturierung aufweist.

Diese und weitere Vorteile der Erfindung werden anhand der nachfolgenden Beispiele näher beschrieben. Es zeigen:
- Fig. 1:: eine fotografische Darstellung der Oberfläche eines erfindungsgemäßen Kunststoffformteils; und
- Fig. 2:: eine mikroskopische Schnittdarstellung der Oberflächenschicht eines erfindungsgemäßen Kunststoffformteils.

### Beispiele

### 1. Herstellung der Beschichtungsmasse

Eine Beschichtungsmasse zur Durchführung des erfindungsgemäßen Herstellungsverfahrens kann durch Mischen der folgenden Bestandteile in den angegebenen Mengenanteilen hergestellt werden:
67,62 Gew.% Bindemittelsirup, bestehend aus 81 Gew.% MMA und 19 Gew.% PMMA des Typs Vedril 9K (Molekulargewichtsbereich von 50.000 bis 250.000 g/mol)
29,52 Gew.% Wollastonit vom Typ TREMIN 939 (Quarzwerke GmbH, Frechen) mit einer Partikelgröße von 2 bis 12 µm
1,60 Gew.% Peroxidmischung
1,26 Gew.% Trimethylolpropantrimethacrylat

### 2. Herstellung der Gießmasse

Es wird ein Bindemittelsirup hergestellt aus 19,08 Gewichtsteilen MMA, 4,48 Gewichtsteilen PMMA des Typs Vedril 9K, einem Gewichtsteil diethoxyliertem Bisphenol-A-Dimethacrylat (Diacryl 101 der Akzo Chemicals GmbH) und 0,44 Gewichtsteilen Trimethylolpropantrimethacrylat als Vernetzer. Die Gewichtsanteile beziehen sich auf die Gießmasse insgesamt, die durch Zugabe der folgenden Typen von granularem Quarzsand Granucol (Gebrüder Dorfner GmbH & Co.), Wollastonit und Farbpigmenten zu dem Bindemittel erhalten wird:
7,13 Gewichtsteile Granucol weiß 1/8 (mittlere Partikelgröße 570 µm)
64,00 Gewichtsteile Granucol weiß 2/9 (mittlere Partikelgröße 330 µm)
1,00 Gewichtsteile Wollastonit (TREMIN 939, Partikelgröße 2 bis 12 µm)
0,29 Gewichtsteile gelber und schwarzer Farbpigmente auf Eisenoxid-Basis
2,58 Gewichtsteile Weißpigment (Titandioxid)

### 3. Herstellung eines Kunststoffformteils

Zur Herstellung eines Kunststoffformteils in Form einer Küchenspüle wird auf diejenige Hälfte eines entsprechenden Formwerkzeugs, die die Sichtseite der Spüle abformt, zunächst die oben beschriebene Beschichtungsmasse in einer Menge von ca. 0,025 g pro cm² mittels eines Pinsel-, Schwamm-, Rollen- oder Sprühauftrags aufgetragen.

Nach einer Wartezeit von ca. 3 min werden die beiden Hälften des Formwerkzeugs geschlossen, mit der oben beschriebenen Gießmasse befüllt und auf ca. 100 °C aufgeheizt. Nach ca. 20 min ist die Gießmasse ausgehärtet und das Kunststoffformteil kann dem Formwerkzeug entnommen werden.

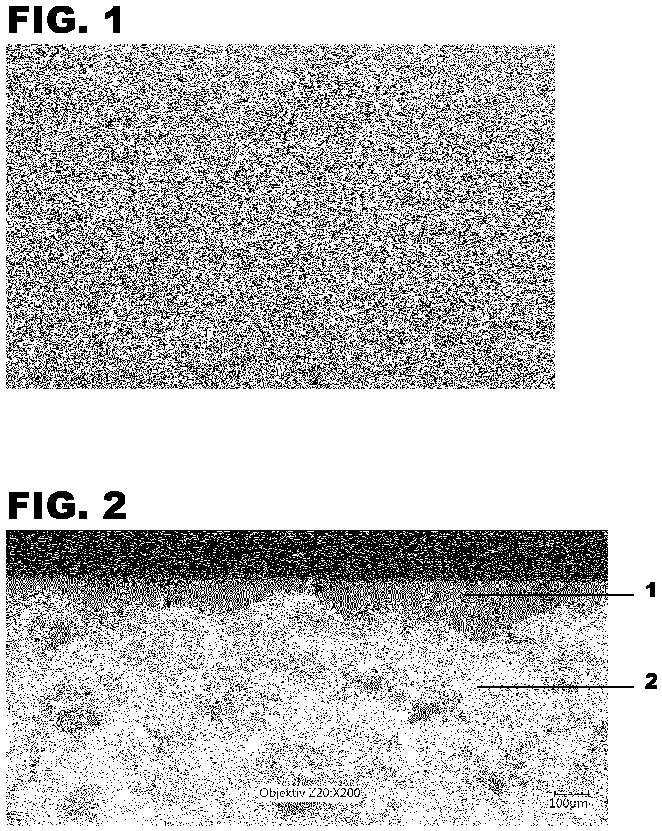

Die von der Beschichtungsmasse gebildete Sichtseite der derart hergestellten erfindungsgemäßen Küchenspüle weist eine optische Strukturierung mit einer Beton-ähnlichen Anmutung auf. Eine fotografische Darstellung dieser Oberfläche (Draufsicht) ist in der Figur 1 zu sehen.

Die Figur 2 zeigt eine mikroskopische Schnittdarstellung der von der Beschichtungsmasse gebildeten Oberflächenschicht 1 (dunkelgrau) und dem von der Gießmasse gebildeten Hauptkörper 2 (hellgrau). Die Dicke der Oberflächenschicht 1 schwankt in dem dargestellten Abschnitt zwischen ca. 40 µm und ca. 170 µm.

### 4. Bestimmung der Abrieb- und Scheuerfestigkeit

Die Abriebfestigkeit der Sichtseite des erfindungsgemäßen Kunststoffformteils im Vergleich zu einem Kunststoffformteil ohne Oberflächenschicht (bei gleicher Zusammensetzung des Hauptkörpers) wurde mit dem Taber-Abraser-Test gemäß ISO 9352 (DIN EN 438-6) ermittelt. Die Ergebnisse sind in der Tabelle 1 angegeben.

**Tabelle 1**

| Probe | Abrieb pro 100 Umdrehungen |
|---|---|
| erfindungsgemäßes Kunststoffformteil | 12,1 mg |
| Vergleichsprobe ohne Oberflächenschicht | 13,1 mg |

Es zeigt sich, dass die Oberflächenschicht des erfindungsgemäßen Kunststoffformteils eine gute Abriebfestigkeit aufweist, die nur unwesentlich geringer ist als diejenige der Vergleichsprobe.

Ferner wurde auf der Sichtseite des erfindungsgemäßen Kunststoffformteils ein Scheuertest durchgeführt, bei dem die Oberfläche mit Hilfe einer Scheuerapparatur mit 10.000 Linearhüben belastet wird. Hierzu wird die grüne Vliesseite eines Spülschwammes der Marke Scotch-Brite, welcher zuvor mit Wasser durchfeuchtet wurde, mit 15 g unverdünnter Viss-Scheuermilch gleichmäßig belegt und mit einem Auflagegewicht von 2 kg in Kontakt mit der Probenoberfläche gebracht. Nach jeweils 2.000 Zyklen wird, um ein Austrocknen des Schwamms zu vermeiden, je 3 ml Viss-Scheuermilch (unverdünnt) auf der Probenoberfläche gleichmäßig verteilt und auf den Schwamm werden zusätzlich 2 ml Wasser aufgebracht.

Nach 10.000 Zyklen war keine Schichtablösung erkennbar, es stellte sich lediglich ein leichter Poliereffekt ein.

## Patentansprüche

1. Verfahren zur Herstellung eines Kunststoffformteils für den Küchen- oder Sanitärbereich mit einem optisch strukturierten Oberflächenbereich, umfassend das Einbringen einer Gießmasse, die ein Bindemittel mit einem polymerisierbaren Monomer und einen Anteil von 40 bis 85 Gew.% mindestens eines anorganischen Füllstoffs umfasst, in ein mehrteiliges Formwerkzeug, Aushärten der Gießmasse in dem Formwerkzeug und Entnehmen des hergestellten Kunststoffformteils aus dem Formwerkzeug,
**dadurch gekennzeichnet, dass** vor dem Einbringen der Gießmasse in das Formwerkzeug unmittelbar auf mindestens einen Teilbereich von dessen Innenseite eine Beschichtungsmasse in einer Menge von 0,02 bis 0,03 g pro cm² der betroffenen Innenfläche des Formwerkzeugs aufgetragen wird, die ein Bindemittel mit einem polymerisierbaren Monomer und einen partikelförmigen Füllstoff umfasst, wobei die Gießmasse unmittelbar nach dem Auftragen der Beschichtungsmasse in das Formwerkzeug eingebracht wird,
wobei sich der partikelförmige Füllstoff der Beschichtungsmasse von dem anorganischen Füllstoff der Gießmasse unterscheidet, und wobei die Füllstoffe so ausgewählt sind, dass sich zwischen der Gießmasse und der Beschichtungsmasse ein optischer Kontrast ergibt.

2. Verfahren nach Anspruch 1, wobei die Beschichtungsmasse auf die Innenseite derjenigen Hälfte eines zweiteiligen Formwerkzeugs aufgebracht wird, die eine Sichtseite des hergestellten Kunststoffformteils bildet.

3. Verfahren nach einem der vorhergehenden Ansprüche, wobei die aufgebrachte Beschichtungsmasse vor dem Einbringen der Gießmasse während eines Zeitraums von 1 bis 5 min ausgehärtet wird, bevorzugt von 2 bis 3 min.

4. Verfahren nach einem der vorhergehenden Ansprüche, wobei das Bindemittel der Gießmasse und der Beschichtungsmasse dasselbe polymerisierbaren Monomer umfasst, vorzugsweise Methylacrylat oder Methylmethacrylat, und optional einen Anteil an vorpolymerisiertem Polymethylacrylat (PMA) oder Polymethylmethacrylat (PMMA).

5. Verfahren nach einem der vorhergehenden Ansprüche, wobei der mindestens eine anorganische Füllstoff der Gießmasse ausgewählt ist aus Quarz, Cristobalit, Tridymit, Glas, Aluminiumtrihydroxid, Wollastonit, Eisenoxide oder Mischungen hiervon.

6. Verfahren nach einem der vorhergehenden Ansprüche, wobei die Beschichtungsmasse keine Farbstoffe, Farbpigmente und/oder Effektpigmente enthält, oder nur solche Farbstoffe, Farbpigmente und/oder Effektpigmente, die auch in der Gießmasse enthalten sind.

7. Verfahren nach einem der vorhergehenden Ansprüche, wobei der partikelförmige Füllstoff der Beschichtungsmasse ausgewählt ist aus Quarz, Cristobalit, Tridymit, Phlogopit, Muskovit, Basalt, natürlichem und beschichtetem Sand, Kaolin, Glas, Metalloxiden sowie silikatischen Mineralien, insbesondere Wollastonit.

8. Verfahren nach einem der vorhergehenden Ansprüche, wobei der partikelförmige Füllstoff der Beschichtungsmasse eine Partikelgröße im Bereich von 1 bis 500 µm aufweist, bevorzugt von 1 bis 250 µm, insbesondere von 2 bis 50 µm.

9. Verfahren nach einem der vorhergehenden Ansprüche, wobei die Beschichtungsmasse einen Anteil von weniger als 40 Gew.% des partikelförmigen Füllstoffs umfasst, bevorzugt einen Anteil von 20 bis 30 Gew.%.

10. Verfahren nach einem der vorhergehenden Ansprüche, wobei das Gewichtsverhältnis der eingesetzten Beschichtungsmasse zur eingesetzten Gießmasse im Bereich von 1:75 bis 1:25 liegt, bevorzugt von 1:50 bis 1:40.

11. Verfahren nach einem der vorhergehenden Ansprüche, wobei die Füllstoffe der Gießmasse und/oder der Beschichtungsmasse mit einer reaktiven Komponente beschichtet sind, insbesondere mit einem Methacrylsilan.

12. Kunststoffformteil für den Küchen- oder Sanitärbereich mit einem optisch strukturierten Oberflächenbereich, hergestellt gemäß dem Verfahren nach einem der vorhergehenden Ansprüche.

13. Kunststoffformteil nach Anspruch 12 in Form einer Küchenspüle, einer Küchenarbeitsplatte, eines Waschbeckens oder einer Badewanne, wobei die Sichtseite des Kunststoffformteils die optische Strukturierung aufweist.

## Claims

1. A method for the manufacture of a plastics moulded part for the kitchen or sanitary sector with an optically structured surface region, comprising the introduction of a casting compound, which comprises a binder with a polymerisable monomer and a proportion of 40-85% by weight of at least one inorganic filler, into a multiple-part moulding tool, curing the casting compound in the moulding tool and removal of the manufactured plastics moulded part from the moulding tool,
**characterised in that** before the introduction of the casting compound into the moulding tool directly on at least one partial region of the interior thereof there is applied a coating compound in an amount of 0.02-0.03 grams/cm² of the appertaining inner surface of the moulding tool, which comprises a binder with a polymerisable monomer and a particulate filler, wherein the casting compound is introduced directly after the application of the coating compound in the moulding tool,
wherein the particulate filler of the coating compound is different from the inorganic filler of the casting compound, and wherein the fillers are so selected that there is an optical contrast between the casting compound and the coating compound.

2. A method according to claim 1, wherein the coating compound is applied to the inner side of that half of a two-part moulding tool which forms a visible side of the manufactured plastics moulded part.

3. A method according to one of the preceding claims, wherein the applied coating compound is cured before the introduction of the casting compound during a period of 1 to 5 minutes, preferably from 2 to 3 minutes.

4. A method according to one of the preceding claims, wherein the binder of the casting compound and the coating compound comprises the same polymerisable monomer, preferably methyl acrylate or methyl methacrylate, and optionally a proportion of pre-polymerised polymethylacrylate (PMA) or polymethyl methacrylate (PMMA).

5. A method according to one of the preceding claims, wherein the at least one inorganic filler of the casting compound is selected from quartz, cristobalite, tridymite, glass, aluminium trihydroxide, wollastonite, iron oxides or mixtures thereof.

6. A method according to one of the preceding claims, wherein the coating compound contains no dyes, pigments and/or effect pigments, or only such dyes, pigments and/or effect pigments which are also contained in the casting compound.

7. A method according to one of the preceding claims, wherein the particulate filler of the coating compound is selected from quartz, cristobalite, tridymite, phlogopite, muscovite, basalt, natural and coated sand, kaolin, glass, metal oxides and also siliceous minerals, in particular wollastonite.

8. A method according to one of the preceding claims, wherein the particulate filler of the coating compound has a particle size in the range of 1 to 500 µm, preferably from 1 to 250 µm, in particular from 2 to 50 µm.

9. A method according to one of the preceding claims, wherein the coating compound has a proportion of less than 40% by weight of the particulate filler, preferably a proportion of 20 to 30 % by weight.

10. A method according to one of the preceding claims, wherein the weight ratio of the introduced coating compound to the introduced casting compound lies in the range of 1:75 to 1:25, preferably from 1:50 to 1:40.

11. A method according to one of the preceding claims, wherein the fillers of the casting compound and/or the coating compound are coated with a reactive component, in particular with a methacryl silane.

12. A plastic moulded part for the kitchen or sanitary sector with an optically structured surface region, manufactured according to the method according to one of the preceding claims.

13. A plastics moulded part according to claim 12 in the form of a kitchen sink, a kitchen working surface, a wash basin or a bath, wherein the visible side of the plastics moulded part has the optical structuring.

## Revendications

1. Procédé de fabrication d'une pièce moulée en matériau plastique pour la cuisine ou les sanitaires, avec une zone de surface structurée optiquement, comprenant l'introduction d'une masse de coulée, qui comprend un liant avec un monomère polymérisable et une proportion de 40 à 85 % en poids d'au moins une charge inorganique, dans un outil de moulage en plusieurs parties, le durcissement de la masse de coulée dans l'outil de moulage et le retrait de la pièce moulée en matière plastique fabriquée hors de l'outil de moulage,
**caractérisé en ce qu'**avant l'introduction de la masse de coulée dans l'outil de moulage, une masse de revêtement est appliquée en une quantité de 0,02 à 0,03 g par cm² de la surface intérieure concernée de l'outil de moulage directement sur au moins une zone partielle de son côté intérieur, laquelle masse de revêtement comprend un liant avec un monomère polymérisable et une charge particulaire, dans lequel la masse de coulée est introduite dans l'outil de moulage directement après l'application de la masse de revêtement,
dans lequel la charge particulaire de la masse de revêtement se distingue de la charge inorganique de la masse de coulée, et dans lequel les charges sont choisies de telle sorte qu'il résulte un contraste optique entre la masse de coulée et la masse de revêtement.

2. Procédé selon la revendication 1, dans lequel la masse de revêtement est appliquée sur le côté intérieur de la moitié d'un outil de moulage en deux parties, laquelle précisément forme un côté visible de la pièce moulée en matière plastique fabriquée.

3. Procédé selon l'une quelconque des revendications précédentes, dans lequel la masse de revêtement appliquée est durcie avant l'introduction de la masse de coulée pendant une période de temps de 1 à 5 min, de manière préférée de 2 à 3 min.

4. Procédé selon l'une quelconque des revendications précédentes, dans lequel le liant de la masse de coulée et de la masse de revêtement comprend le même monomère polymérisable, de préférence de l'acrylate de méthyle ou du méthacrylate de méthyle, et en option une proportion de polyacrylate de méthyle (PMA) ou de polyméthacrylate de méthyle (PMMA) prépolymérisé.

5. Procédé selon l'une quelconque des revendications précédentes, dans lequel l'au moins une charge inorganique de la masse de coulée est choisie parmi le quartz, la cristobalite, la tridymite, le verre, le trihydroxyde d'aluminium, la wollastonite, des oxydes de fer ou des mélanges de ceux-ci.

6. Procédé selon l'une quelconque des revendications précédentes, dans lequel la masse de revêtement ne contient aucun colorant, pigment de couleur et/ou pigment à effet, ou ne contient que des colorants, pigments de couleur et/ou pigments à effet, qui sont également contenus dans la masse de coulée.

7. Procédé selon l'une quelconque des revendications précédentes, dans lequel la charge particulaire de la masse de revêtement est choisie parmi le quartz, la cristobalite, la tridymite, le phlogopite, la muscovite, le basalte, du sable naturel et revêtu, le kaolin, le verre, des oxydes métalliques ainsi que des minéraux siliceux, en particulier de la wollastonite.

8. Procédé selon l'une quelconque des revendications précédentes, dans lequel la charge particulaire de la masse de revêtement présente une taille de particule dans la plage de 1 à 500 µm, de manière préférée de 1 à 250 µm, en particulier de 2 à 50 pm.

9. Procédé selon l'une quelconque des revendications précédentes, dans lequel la masse de revêtement comprend une proportion inférieure à 40 % en poids de la charge particulaire, de préférence une proportion de 20 à 30 % en poids.

10. Procédé selon l'une quelconque des revendications précédentes, dans lequel le rapport de poids de la masse de revêtement employée par rapport à la masse de coulée employée se situe dans la plage de 1:75 à 1:25, de manière préférée de 1:50 à 1:40.

11. Procédé selon l'une quelconque des revendications précédentes, dans lequel les charges de la masse de coulée et/ou de la masse de revêtement sont revêtues d'un composant réactif, en particulier d'un silane méthacrylique.

12. Pièce moulée en matière plastique pour la cuisine ou les sanitaires avec une zone de surface structurée optiquement, fabriquée selon le procédé selon l'une quelconque des revendications précédentes.

13. Pièce moulée en matière plastique selon la revendication 12 sous la forme d'un évier de cuisine, d'un plan de travail de cuisine, d'un lavabo ou d'une baignoire, dans laquelle le côté visible de la pièce moulée en matière plastique présente la structuration optique.
